(19) Europäisches Patentamt
European Patent Office
Office européen des brevets

(11) EP 4 177 797 A1

(12) **EUROPEAN PATENT APPLICATION**

(43) Date of publication:
**10.05.2023 Bulletin 2023/19**

(21) Application number: **22186006.7**

(22) Date of filing: **20.07.2022**

(51) International Patent Classification (IPC):
***G06N 3/08*** *(2023.01)*

(52) Cooperative Patent Classification (CPC):
**G06N 3/08; G06N 3/098**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.11.2021 JP 2021181917**

(71) Applicant: **FUJITSU LIMITED**
**Kawasaki-shi, Kanagawa 211-8588 (JP)**

(72) Inventor: **OKUNO, Shingo**
**Kawasaki-shi, Kanagawa, 211-8588 (JP)**

(74) Representative: **Haseltine Lake Kempner LLP**
**Cheapside House**
**138 Cheapside**
**London EC2V 6BJ (GB)**

(54) **MACHINE LEARNING PROGRAM, MACHINE LEARNING DEVICE, AND MACHINE LEARNING METHOD**

(57) A machine learning program that causes at least one computer to execute a process, the process includes, in distributed machine learning in which a plurality of workers perform by using a plurality of pieces of divided data obtained by dividing training data in parallel, when performance of one or more first workers of the plurality of workers degrades, determining that first calculation results of the first workers are not reflected in the machine learning, and causing second workers of the plurality of workers to perform the machine learning; predicting second calculation results of the first workers based on third calculation results of the second workers; and performing the machine learning by using the third calculation results and the predicted second calculation results.

FIG. 1

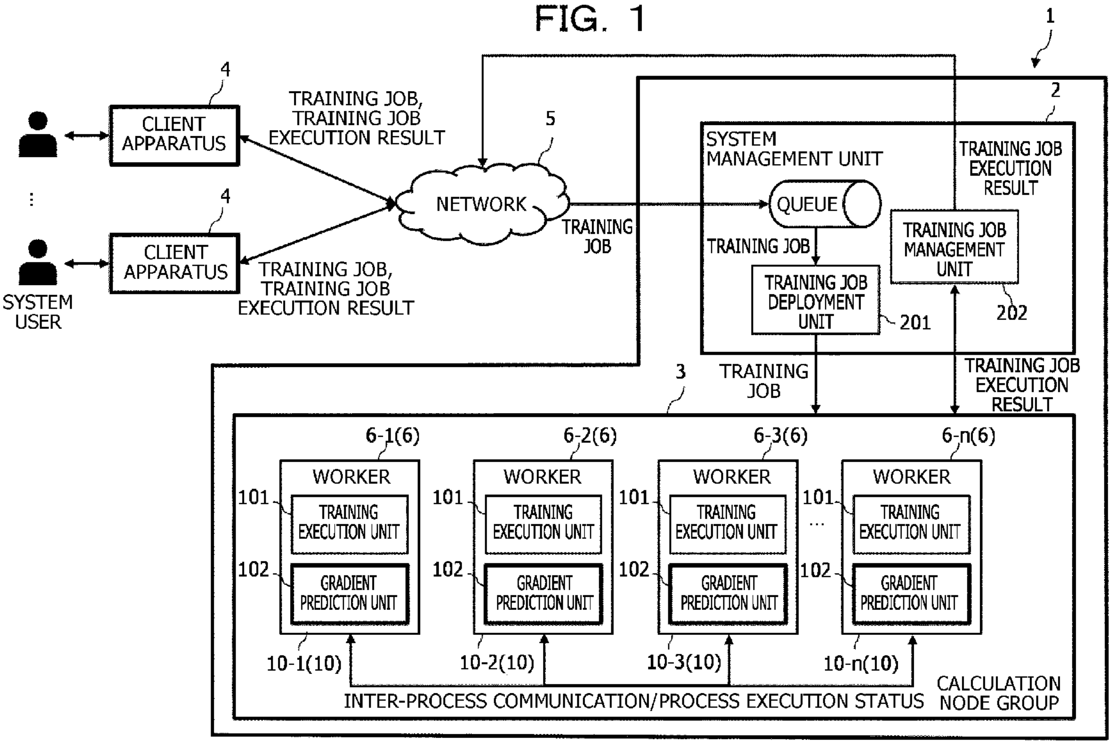




Processed by Luminess, 75001 PARIS (FR)

## Description

FIELD

Embodiments discussed herein are related to distributed training by using data parallelism.

BACKGROUND

As a machine learning technique in deep training, distributed training with data parallelism is known. In the distributed training, a plurality of workers (processes) having the same neural network (model) are provided and different pieces of training data are input to the plurality of workers to carry out the machine learning. The machine learning may also be referred to as training.

In the machine learning, each worker repeatedly carries out processes of calculation, communication, and model update.

The calculation process includes forward propagation and backward propagation.

In the backward propagation, weight gradient information (may be simply referred to as a gradient hereinafter) indicating the amount of the weight of the neural network desired to be changed next so as to update the weight with a decreased error (loss) may be obtained.

In the communication process, the plurality of workers mutually exchange training results (such as gradients) calculated in the calculation process through allreduce communication or the like.

In the update process, each worker aggregates the training results of the backward propagation in all the workers to obtain an average of the gradients and updates values of various parameters based on the average.

In the distributed training with the data parallelism, communication is performed between the workers when aggregating the training result of each worker, and, out of the plurality of workers, a worker that processes at a significantly low speed may be generated. Such a significantly low-speed processing worker out of the plurality of workers participating in the distributed training may be referred to as a straggler.

In a synchronous distributed training, a synchronization delay may be generated by the straggler, leading to a significantly increase in training time.

Accordingly, a technique of suppressing rate-determination of the entire performance by such a straggler (straggler mitigation) is known. According to a technique of straggler mitigation of related art, a decrease in speed is suppressed by removing the straggler from aggregation target of training results and continuing the training by using training results of only remaining workers.

FIG. 14 is a diagram for explaining the technique of straggler mitigation of related art in the distributed training with data parallelism.

FIG. 14 illustrates distributed training with the data parallelism by using workers #A to #D, and a delay is generated in the calculation process of the worker #D. For example, the worker D is a straggler, and synchronization delay for completion of the calculation process of the worker D is generated in the workers #A to #C.

Accordingly, a scale-in state is assumed in which the worker #D being a straggler is removed from the aggregation target of the training results and the number of workers used for the training is decreased, and the training is continued by using the training results of only the remaining workers #A to #C so as to suppress a decrease in speed. In the example illustrated in FIG. 14, the number of workers is scaled in from four to three.

According to the above-described technique of straggler mitigation of related art, the worker excluded from distributed training (straggler) is caused to independently execute the calculation process even after this worker has been removed from the distributed training. When the excluded worker recovers from slowdown, the worker is returned to the training and caused to process the latest epoch.

Japanese Laid-open Patent Publication No. 2021-68393, Japanese Laid-open Patent Publication No. 2019-109875, and U.S. Patent Application Publication No. 2020/0364608 are disclosed as related art.

SUMMARY

[TECHNICAL PROBLEM]

However, in such a technique of straggler mitigation of related art, the worker being the straggler is excluded from the aggregation target of the training results. Thus, a training data portion allocated to the worker excluded from the aggregation target of the training results (excluded worker) is not used for the training. Accordingly, accuracy during the training degrades.

The model is optimized for the training data used during the scale-in. Thus, when the excluded worker recovers from slowdown and the worker is returned to the training, accuracy of the model degrades immediately after the return.

It is desirable that degradation in accuracy may be suppressed even in a case where a calculation result of a worker with degraded performance is not reflected in machine learning in distributed machine learning with data parallelism.

[SOLUTION TO PROBLEM]

According to an arrangement, an apparatus includes machine learning program that causes at least one computer to execute a process, the process includes, in distributed machine learning in which a plurality of workers perform by using a plurality of pieces of divided data obtained by dividing training data in parallel, when performance of one or more first workers of the plurality of workers degrades, determining that first calculation results of the first workers are not reflected in the machine learning, and causing second workers of the plurality of workers to perform the machine learning; predicting second calculation results of the first workers based on third calculation results of the second workers; and performing the machine learning by using the third calculation results and the predicted second calculation results.

[ADVANTAGEOUS EFFECTS OF INVENTION]

According to the present disclosure, the degradation in accuracy may be suppressed even in the case where the calculation result of the worker with degraded performance is not reflected in the machine learning in the distributed machine learning with the data parallelism.

BRIEF DESCRIPTION OF DRAWINGS

The invention is described, by way of example only, with reference to the following drawings, in which:

FIG. 1 is a diagram schematically illustrating a configuration of a computer system as an example of a first embodiment;
FIG. 2 is a diagram illustrating an example of a hardware configuration of a calculation node of the computer system as the example of the first embodiment;
FIG. 3 is a diagram for explaining processing performed by a gradient prediction unit of the computer system as the example of the first embodiment;
FIG. 4 is a diagram illustrating examples of a data distribution and the degree of similarity between the workers;
FIG. 5 is a diagram illustrating an overview of a method of distributed training in the computer system as the example of the first embodiment;
FIG. 6 is a flowchart for explaining processing of the distributed training in the computer system as the example of the first embodiment;
FIG. 7 is a flowchart illustrating the details of the processing in step A6 of the flowchart illustrated in FIG. 6;
FIG. 8 is a flowchart illustrating the details of the processing in step A9 of the flowchart illustrated in FIG. 6;
FIG. 9 is a diagram for explaining a method of allocating pieces of divided data to a plurality of workers in the computer system as an example of a second embodiment;
FIG. 10 is a flowchart for explaining processing performed by the gradient prediction unit in the computer system as the example of the second embodiment;
FIG. 11 is a diagram for explaining selective use of gradient prediction methods in the computer system according to a third embodiment;
FIG. 12 is a flowchart for explaining the processing of the distributed training in the computer system as the example of the third embodiment;
FIG. 13 is a diagram illustrating a comparison between an embodiment with a leader worker and an embodiment without the leader worker; and
FIG. 14 is a diagram for explaining a technique of straggler mitigation of related art in the distributed training with data parallelism.

DESCRIPTION OF EMBODIMENTS

Embodiments of a program, a calculator, and a method will be described below with reference to the drawings. However, the following embodiments are merely exemplary and it is not intended to exclude application of various modification examples and techniques that are not explicitly described in the embodiments. For example, the present embodiments may be carried out while being modified in various ways (such as combining the embodiments and the modification examples) without departing from the gist of the present embodiments. The drawings are not provided with an intention that only the elements illustrated in the drawings are included. Other functions and the like may be included.

(I) Description of First Embodiment

(A) Configuration

FIG. 1 is a diagram schematically illustrating a configuration of a computer system 1 as an example of a first embodiment. As illustrated in FIG. 1, the computer system 1 as the example of the first embodiment includes a system management unit 2 and a calculation node group 3. One or more client apparatuses 4 are coupled to the computer system 1 via a network 5.

Each of the client apparatuses 4 is an information processing apparatus used by a user (system user) of this computer system 1. The system user uses the client apparatus 4 to input a training job to be executed by a plurality of workers 6 to be described later. The training job includes inputting training data to a machine learning model and training of the machine learning model.

The training job input from the client apparatus 4 is input to the system management unit 2 to be described later via the network 5. A training job execution result transmitted from the system management unit 2 is input to the client apparatus 4 via the network 5.

The client apparatus 4 may include an output device (not illustrated) such as a display and a printer to, for example, output the received training job execution result via the output device, thereby presenting the received training job execution result to the system user.

The system management unit 2 manages distributed machine learning with data parallelism performed by the plurality of workers by using a plurality of pieces of divided data obtained by dividing the training data. The system management unit 2 manages the training job to be executed by a plurality of (n) calculation nodes 10-1 to 10-n (workers 6-1 to 6-n). Hereinafter, the calculation nodes 10-1 to 10-n will be referred to as calculation nodes 10 in a case where the calculation nodes 10-1 to 10-n are not particularly distinguished from each other. Each of the calculation nodes 10 realizes a function of a worker. The workers 6-1 to 6-n will be referred to as workers 6 in a case where the workers 6-1 to 6-n are not particularly distinguished from each other.

The system management unit 2 has the functions of a training job deployment unit 201 and a training job management unit 202.

The training job deployment unit 201 allocates training jobs to the plurality of workers and prompts them to execute the training jobs. For example, the training jobs transmitted by one or more client apparatuses 4 via the network 5 are stored in a queue of the system management unit 2. The training job deployment unit 201 reads the training jobs stored in the queue and allocates the training jobs to the workers 6.

The training job deployment unit 201 causes the plurality of workers 6 to perform distributed training with the data parallelism.

The training job deployment unit 201 creates the pieces of divided data by dividing training data into a plurality of pieces and allocates the pieces of divided data to the workers 6. Each piece of divided data includes a plurality of mini-batches.

The training job deployment unit 201 manages, for example, processing time by each worker 6 and detects occurrence of a straggler.

The training job deployment unit 201 excludes a straggler from training (a communication group). Hereinafter, the straggler (the worker 6) excluded from the training may be referred to as an excluded worker. Out of the plurality of workers 6, workers 6 other than the excluded worker 6 may be referred to as included workers.

A technique of suppressing a decrease in training speed by removing the straggler (excluded worker 6) from an aggregation target of training results and continuing the training by using the training results of only the remaining workers 6 may be referred to as separation.

The training job deployment unit 201 performs control of excluding the straggler from the training (communication group) by, for example, excluding the straggler from a participation group of allreduce communication.

The training job deployment unit 201 periodically observes, for example, calculation time $\tau i$ taken for calculation performed by a worker #i.

The training job deployment unit 201 determines that a worker 6 whose calculation time $\tau i$ is greater than a threshold is a straggler.

The training job deployment unit 201 may calculate the threshold for detecting the straggler by using expression (1) described below.

$$\theta \cdot \frac{\sum_{i \in \Omega} \tau_i}{|\Omega|} \quad \cdots (1)$$

In expression (1) above, θ is a constant, and Ω represents a set obtained by removing the excluded worker 6 from all the workers 6.

In a case where occurrence of the straggler is detected, the training job deployment unit 201 may notify each worker 6 of the straggler.

The training job deployment unit 201 causes each of at least two included workers (second workers) out of the plurality of workers 6 to perform machine learning in a state in which the performance of at least one excluded worker (first workers) 6 out of the plurality of workers 6 degrades and calculation result (gradient) of the excluded worker 6 is not reflected in the machine learning (a separation mode).

The training job management unit 202 receives an execution result of the training job for the machine learning model from each worker 6 and responds to the client apparatus 4 via the network 5.

For example, in the information processing apparatus having a server function (not illustrated), a processor (not illustrated) executes a management program and an operating system (OS) to realize the function of the system management unit 2.

The calculation node group 3 includes a plurality of (n in the example illustrated in FIG. 1) calculation nodes 10-1 to 10-n.

For simplicity, FIG. 1 illustrates an example in which a single calculation node 10 realizes the function of a single worker 6.

For example, the calculation node 10-1 realizes the function of the worker 6-1. Similarly, the calculation node 10-2, the calculation node 10-3, and the calculation node 10-n realizes the function of the worker 6-2, the function of the worker 6-3, and the function of the worker 6-n, respectively.

The workers 6 perform the training of the machine learning model. The workers 6 may also be referred to as processes or threads.

In the calculation nodes 10, the workers 6 are allocated to calculation resources (for example, processors 11, see FIG. 2) secured in advance by the system user or the like to execute the training of the machine learning model. Each calculation node 10 has a similar hardware configuration.

FIG. 2 is a diagram illustrating an example of a hardware configuration of the calculation node 10 of the computer system 1 as an example of the first embodiment.

The calculation node 10 includes, for example, a processor 11, a memory 12, a storage device 13, a graphic processing device 14, an input interface 15, an optical drive device 16, a device coupling interface 17, and a network interface 18 as the elements thereof. These elements 11 to 18 are configured to be mutually communicable via a bus 19.

The processor (processing unit) 11 controls the entirety of the calculation node 10. The processor 11 may be a multiprocessor. For example, the processor 11 may be any one of a central processing unit (CPU), a microprocessor unit (MPU), a digital signal processor (DSP), an application-specific integrated circuit (ASIC), a programmable logic device (PLD), and a field-programmable gate array (FPGA). The processor 11 may be a combination of two or more types of the elements selected from the CPU, the MPU, the DSP, the ASIC, the PLD, and the FPGA. The processor 11 may be a graphics processing unit (GPU).

When the processor 11 executes a control program (program, OS program) for the calculation node 10, the processor 11 functions as a training execution unit 101 and a gradient prediction unit 102 exemplified in FIG. 1.

The calculation node 10 executes, for example, programs (a model generation program, the OS program) recorded in a computer-readable non-transitory recording medium, thereby realizing the functions of the training execution unit 101 and the gradient prediction unit 102.

The programs describing content of processing to be executed by the calculation node 10 may be recorded in various recording media. For example, the programs to be executed by the calculation node 10 may be stored in the storage device 13. The processor 11 loads at least part of the programs in the storage device 13 onto the memory 12 and executes the loaded program.

The programs to be executed by the calculation node 10 (processor 11) may be recorded in a non-transitory portable-type recording medium such as an optical disc 16a, a memory device 17a, or a memory card 17c. For example, the programs stored in the portable-type recording medium become executable after being installed in the storage device 13 under the control from the processor 11. The processor 11 may execute the programs by reading the programs directly from the portable-type recording medium.

The memory 12 is a storage memory including a read-only memory (ROM) and a random-access memory (RAM). The RAM of the memory 12 is used as a main storage device of the calculation node 10. The programs to be executed by the processor 11 are at least partially temporarily stored in the RAM. Various types of data desired for the processing by the processor 11 are stored in the memory 12.

The storage device 13 is a storage device such as a hard disk drive (HDD), a solid-state drive (SSD), or a storage class memory (SCM) and stores various types of data. The storage device 13 is used as an auxiliary storage device of the calculation node 10. The OS program, the control program, and various types of data are stored in the storage device 13. The control program includes a program for realizing distributed machine learning. Data for realizing the machine learning model for which each worker 6 performs the training may be stored in the storage device 13.

A semiconductor storage device such as an SCM or a flash memory may be used as the auxiliary storage device. A plurality of storage devices 13 may be used to configure redundant arrays of inexpensive disks (RAID).

The storage device 13 may store various types of data generated when the training execution unit 101 and the gradient prediction unit 102 described above execute the respective processes.

A monitor 14a is coupled to the graphic processing device 14. The graphic processing device 14 displays an image on a screen of the monitor 14a according to an instruction from the processor 11. Examples of the monitor 14a include a display device using a cathode ray tube (CRT), a liquid crystal display device, and the like.

A keyboard 15a and a mouse 15b are coupled to the input interface 15. The input interface 15 transmits signals received from the keyboard 15a and the mouse 15b to the processor 11. The mouse 15b is an example of a pointing device, and a different pointing device may be used. Examples of the different pointing device include a touch panel, a tablet, a touch pad, a track ball, and the like.

The optical drive device 16 reads data recorded in the optical disc 16a by using laser light or the like. The optical disc 16a is a portable-type non-transitory recording medium in which data is recorded in such a way that the data is readable by using light reflection. Examples of the optical disc 16a include a Digital Versatile Disc (DVD), a DVD-RAM, a compact disc read-only memory (CD-ROM), a CD-recordable (R)/rewritable (RW), and the like.

The device coupling interface 17 is a communication interface for coupling peripheral devices to the calculation node 10. For example, the memory device 17a or a memory reader/writer 17b may be coupled to the device coupling interface 17. The memory device 17a is a non-transitory recording medium such as a Universal Serial Bus (USB) memory that has a function of communicating with the device coupling interface 17. The memory reader/writer 17b writes data to the memory card 17c or reads data from the memory card 17c. The memory card 17c is a card-type non-transitory recording medium.

The network interface 18 is coupled to a network (not illustrated). The network interface 18 exchanges data via this network. The workers functioning in the calculation nodes 10 perform inter-process communication with the workers of other calculation nodes 10 via the network interface 18. Each worker exchanges information indicating a process execution status with the workers of the other calculation nodes 10 via the network interface 18. Other information processing apparatuses, communication devices, and the like may be coupled to the network. The network interface 18 may be coupled to the network 5 described above.

The worker 6 has the functions of the training execution unit 101 and the gradient prediction unit 102.

In a state in which the excluded worker 6 is excluded (separated) from the machine learning, gradient prediction units 102 predicts (estimates) a gradient calculated by the excluded worker 6. The gradient calculated by the excluded worker 6 may be simply expressed as the gradient of the excluded worker 6. The gradients calculated by the workers 6 may be referred to as gradients of the workers 6.

In the included workers (second workers) 6, the gradient prediction units 102 predict calculation result (gradient) of the excluded worker (first worker) 6 based on calculation results of at least two included workers 6.

According to the first embodiment, the gradient prediction units 102 calculate the degree of similarity between the pieces of divided data and calculates the gradient of the excluded worker 6 based on the gradient calculated from a piece of divided data having a high degree of similarity in the included workers 6.

The gradients are calculated on a mini-batch-by-mini-batch basis in a neural network. Accordingly, in the computer system 1 according to the first embodiment, the gradient prediction units 102 calculate the degree of similarity between mini-batches used by the workers 6, use the calculated degree of similarity as the weight, and predict the gradient calculated by the excluded worker 6.

FIG. 3 is a diagram for explaining processing performed by the gradient prediction units 102 of the computer system 1 as the example of the first embodiment.

FIG. 3 illustrates pieces of divided data do to $d_3$, and each of the divided data do to $d_3$ includes pieces of training data that each have one of three types of labels indicated by a black filled circle, a black filled triangle, and a black filled square.

Referring to FIG. 3, for example, the piece of divided data do includes three pieces of training data having the label of the black filled circle, seven pieces of training data having the label of the black filled triangle, and five pieces of training data having the label of the black filled square. In contrast, the piece of divided data $d_2$ includes nine pieces of training data having the label of the black filled circle, five pieces of training data having the label of the black filled triangle, and four pieces of training data having the label of the black filled square.

As described above, the abundance ratio of the plurality of labels may differ among the plurality of pieces of training data provided in the divided data or the mini-batches. Based on such differences in abundance ratio of the labels among the plurality of pieces of training data, the gradient prediction units 102 calculate the degree of similarity between the pieces of divided data or between the mini-batches. The abundance ratios of the labels among the plurality of pieces of training data may be referred to as a data distribution.

For example, the gradient prediction units 102 may use the histogram intersection as the degree of similarity.

Based on the distribution of a mini-batch bx for which a worker x is responsible and the distribution of a mini-batch for which a worker y is responsible, the gradient prediction units 102 calculates, by using expression (2) below, a degree of similarity Sxy between the mini-batch bx and the mini-batch by.

$$s_{xy} = \sum_{i \in C} \min(b_{xi}, b_{yi}) \quad \cdot\cdot\cdot (2)$$

In expression (2) above, $b_{xi}$ is the number of pieces of data of class i ∈ C included in the mini-batch bx, and $b_{yi}$ is the number of pieces of data of class i ∈ C included in the mini-batch bx.

As the value of the degree of similarity Sxy increases, the similarity in data distribution between the mini-batches increases.

FIG. 4 is a diagram illustrating examples of the data distribution and the degree of similarity between the workers.

Referring to FIG. 4, sign A represents the data distribution of the pieces of training data to be processed by each worker in bar graph and indicates the number of pieces of training data for each worker on a class-by-class basis.

In sign A, a data distribution at epoch 0 and iteration 0 is indicated in an example in which the dataset is CIFAR-10, the number of workers is four, the number of classes is ten, and the batch size is 16.

In sign B, the degrees of similarity between the mini-batches of the workers #0 to #3 in the data distribution indicated by sign A are indicated in a matrix.

In the example illustrated in FIG. 4, it is understood that, for example, the degree of similarity in mini-batch between the worker #0 and the worker #2 is high, and the degree of similarity in mini-batch between the worker #1 and the worker #2 is low.

Based on a weighted average using the calculated the degree of similarity between mini-batches as the weight, the gradient prediction units 102 calculate, by using expression (3) described below, a gradient $g(b_\varepsilon)$ for a mini-batch bε for which an excluded worker ε is responsible.

$$g(b_\varepsilon) = \frac{\sum_{\omega \in \Omega} s_{\omega\varepsilon}^{l} \cdot g(b_\omega)}{\sum_{\omega \in \Omega} s_{\omega\varepsilon}^{l}} \quad \cdot\cdot\cdot (3)$$

In expression (3) above, I represents a degree, and Ω represents a set obtained by excluding the excluded worker ε from all the workers 6.

In expression (3), the weight is set such that the gradient of a worker that processes a mini-batch having a high degree of similarity to the mini-batch of the excluded worker ε is strongly reflected in the gradient $g(b_\varepsilon)$.

For example, the gradient prediction units 102 reflect, in the prediction of the calculation result of the excluded worker, the calculation result of a worker that processes mini-batch having a high degree of similarity to the mini-batch processed by the excluded worker more significantly than the calculation result of a worker having a low degree of similarity to the mini-batch processed by the excluded worker. The gradient prediction units 102 reflect more significantly, in prediction of the calculation result of the excluded worker, the calculation result of the worker that processes a piece of divided data which exhibits a higher degree of similarity to a piece of divided data processed by the excluded worker.

The training execution units 101 perform the training (machine learning) on the machine learning model by using the training data (divided data) allocated by the training job deployment unit 201 of the system management unit 2.

The machine learning model is realized by using a neural network, performs inference on input data, and outputs an inference result.

The neural network may be a hardware circuit or a virtual network by software that couples layers virtually built in a computer program by the processor 11.

The training execution units 101 perform the machine learning by using the training data (divided data) allocated by the training job deployment unit 201 of the system management unit 2 to generate the machine learning model.

The training execution units 101 input the training data (divided data) to a machine learning model on a mini-batch-by-mini-batch basis and perform a calculation process including forward propagation and backward propagation.

In the backward propagation, the training execution units 101 calculate weight gradient information (gradient) indicating the amount of the weight of the neural network desired to be changed next so that the weight may be updated with a decreased error (loss).

The training execution units 101 exchange the calculated gradients with the other included workers 6 through allreduce communication or the like.

After that, the training execution units 101 obtain an average of the weight gradients by aggregating the gradients calculated by the included workers 6 and the gradient of the excluded worker calculated by the gradient prediction units 102 and update the values of the various parameters based on the average.

For example, the training execution units 101 perform the machine learning by using the calculation result of each included worker and the predicted calculation result of the excluded worker 6.

(B) Operation

FIG. 5 is a diagram illustrating an overview of a method of distributed training in the computer system 1 as the example of the first embodiment.

FIG. 5 illustrates a state in which, in the distributed training with the data parallelism by using four workers #A to #D, a delay is generated in the calculation process of the worker #D, and the worker #D is determined as a straggler and separated from the other workers (removed).

In the workers #A to #C, the respective gradient prediction units 102 predict a gradient $g_{D'}$ of the worker #D in addition to the calculation of the respective gradients $g_A$, $g_B$, and gc.

After that, each of the workers #A to #C aggregates, through the allreduce communication, the gradients $g_A$, $g_B$, and $g_C$ calculated in the calculation process by the respective workers 6. In each of the workers #A to #C, an average $g^-$ of the gradients between workers is calculated by using the gradients $g_A$, $g_B$, $g_C$ and the predicted gradient $g_{D'}$. Each worker 6 uses the gradient g to update the gradient (training parameter) of the machine learning model.

The processing of the distributed training in the computer system 1 as the example of the first embodiment configured as described above will be described with reference to a flowchart (steps A1 to A9) illustrated in FIG. 6.

In step A1, the training job deployment unit 201 of the system management unit 2 creates the pieces of divided data by dividing the training data into a plurality of pieces and allocates the pieces of divided data to the workers 6.

In step A2, distributed training by the plurality of workers 6 starts. Each worker 6 performs the training of the machine learning model in parallel by using a corresponding one of the pieces of divided data allocated thereto.

In step A3, for example, the training job management unit 202 checks whether the training has ended. In a case where a predetermined end condition is satisfied, the training job management unit 202 determines that the training has ended. The end condition may be changed as appropriate to perform the processing. For example, the fact that a preset number of epochs has been reached may be set as the end condition, or the fact that a predetermined value of accuracy (training accuracy) of the machine learning model has been reached may end.

As a result of the check in step A3, in a case where the training has not ended (see a NO route in step A3), the processing moves to step A4.

In each worker 6, the training execution unit 101 starts training of the machine learning model by using the piece of divided data allocated to the worker 6.

In step A4, the training execution units 101 calculate the gradients in the backward propagation. A value of the gradient calculated by each worker 6 is exchanged between the workers 6 by the allreduce communication.

In step A5, the training job deployment unit 201 checks whether a worker 6 having been determined as the excluded worker (straggler) exists among the plurality of workers 6. Determination of the excluded worker is performed in step A9 to be described later.

In a case where the excluded worker 6 exist as a result of the check in step A5, (see a YES route in step A5), the processing proceeds to step A6.

In step A6, the gradient prediction units 102 predict the gradient of the excluded worker 6. The details of the processing in step A6 will be described later with reference to FIG. 7. After that, the processing moves to step A7.

Also in a case where the excluded worker 6 does not exist as a result of the check in step A5 (see a NO route in step A5), the processing moves to step A7.

In step A7, the training execution units 101 calculate the average of the gradients between the workers 6 by using each of the gradients calculated in a corresponding one of the included workers 6 and the gradient of the excluded worker 6 calculated by the gradient prediction units 102.

In step A8, the training execution units 101 update the gradient of the machine learning model (training parameter) by using the average of the calculated gradients between the workers 6.

In step A9, the training job deployment unit 201 performs processing of excluding the straggler from the distributed training. The details of the processing in step A9 will be described later with reference to FIG. 8. After that, the processing returns to step A3.

As a result of the check in step A3, in a case where the training has ended (see a YES route in step A3), the processing ends.

Next, the details of the processing in step A6 of the flowchart illustrated in FIG. 6 will be described with reference to a flowchart (steps B1 to B2) illustrated in FIG. 7.

In step B1, the gradient prediction units 102 calculate the degree of similarity between mini-batches used by the workers 6.

In step B2, based on the weighted average with the calculated degree of similarity between the mini-batches as the weight, the gradient prediction units 102 calculate, by using expression (3) above, the gradient for the mini-batch for which the excluded worker 6 is responsible. After that, the processing moves to the processing in step A7 illustrated in FIG. 6.

Next, the details of the processing in step A9 of the flowchart illustrated in FIG. 6 will be described with reference to a flowchart (steps C1 to C3) illustrated in FIG. 8.

In step C1, the training job deployment unit 201 of the system management unit 2 checks the calculation time of each worker 6 participating in the distributed training (training).

In step C2, the training job deployment unit 201 calculates a threshold that serves as the condition for the straggler. The calculation of the threshold may be realized by using various known techniques. For example, the threshold may be determined based on an average of the calculation time of the workers 6. A predetermined value (fixed value) may be used as the threshold. This value may be changed as appropriate to perform the processing.

In step C3, the training job deployment unit 201 extracts workers 6 that satisfy the threshold from among the plurality of workers 6 and generates the participation group of the allreduce communication. The worker 6 with calculation time that does not satisfy the threshold is determined as the straggler and excluded from training (distributed training).

The worker (excluded worker) having been excluded from the training may be a target of the determination of whether the threshold is satisfied (whether the worker is a straggler). The reason for this is that the excluded worker 6 independently performs the calculation even after the excluded worker 6 has been removed from the training. In a case where the calculation time of such an excluded worker 6 satisfies the threshold, this worker 6 is returned to the training. After that, the processing moves to step A3 of the flowchart illustrated in FIG. 6.

(C) Effects

As described above, with the computer system 1 as the example of the first embodiment, in the state in which the excluded worker 6 is separated, the gradient prediction units 102 predict (estimate) the gradient calculated by this excluded worker 6.

Accordingly, in the training of the machine learning by the training execution units 101, degradation in training accuracy due to the separation of the excluded worker 6 may be suppressed. The value predicted as the gradient by the excluded worker 6 is reflected in the training of the machine learning by the training execution units 101. This may suppress generation of degradation in accuracy immediately after the excluded worker 6 has been restored from a delay recovery.

The gradient prediction units 102 calculate the degree of similarity between the mini-batches for which the workers 6 are responsible and, based on the weighted average with the degree of similarity between these mini-batches as the weight, calculate the gradient for the mini-batch for which the excluded worker 6 is responsible. Thus, the gradient prediction units 102 may predict the gradient of the excluded worker with high accuracy.

For example, the gradient prediction units 102 strongly reflect, in the gradient estimated by the excluded worker 6, the gradient of the worker 6 that has processed a mini-batch and the data distribution (class distribution) of which exhibits a high degree of similarity to that of the excluded worker 6. Thus, the gradient prediction units 102 may predict the gradient of the excluded worker 6 with high accuracy.

In the machine learning, overtraining is avoided by improving generalization performance by stopping training at a time when improvement in accuracy of the machine learning model is not observed.

With the technique of related art, early stopping may be carried out at an early stage when degradation in accuracy is generated by straggler mitigation. In the computer system 1 according to the first embodiment, degradation in training accuracy due to the separation of the excluded worker may be suppressed, and accordingly, the occurrences of a situation in which early stopping is carried out at an early stage may be suppressed.

(II) Description of Second Embodiment

In the computer system 1 according to the above-described first embodiment, the gradient prediction units 102 calculate the degree of similarity between the pieces of divided data and calculates the gradient of the excluded worker 6 based on the gradient calculated from the piece of divided data having a high degree of similarity in the included workers 6. However, this is not limiting.

In the computer system 1 as an example of a second embodiment, the gradient prediction unit 102 performs gradient prediction for the excluded worker 6 by focusing on allocation of the pieces of divided data to the workers 6.

(A) Configuration

Portions of the computer system 1 as the example of the second embodiment are similarly configured to those of the computer system 1 according to the first embodiment except for the gradient prediction technique for the excluded worker 6 by the gradient prediction units 102. Thus, description of the similarly configured portions is omitted.

FIG. 9 is a diagram for explaining a method of allocating the pieces of divided data to the plurality of workers 6 in the computer system 1 as the example of the second embodiment.

An example illustrated in FIG. 9 illustrates the pieces of divided data allocated to four workers #A to #D in three epochs i, i + 1, and i + 2.

In the example illustrated in FIG. 9, each worker 6 uses the different pieces of the divided data in the different epochs. For example, for the worker #A, pieces of divided data $d_0$, $d_3$, and $d_2$ are used in the epochs i, i + 1, and i + 2, respectively.

The pieces of divided data are reallocated among the plurality of workers 6, and the piece of divided data allocated in one epoch (for example, epoch i) to a certain worker 6 is reallocated to another worker 6 in the next epoch (for example, epoch i + 1).

Accordingly, the pieces of divided data allocated to the excluded worker 6 have been used by a different worker 6 in the past.

Accordingly, in the computer system 1 as the example of the second embodiment, the gradient prediction units 102 predict the gradient of the excluded worker 6 based on the gradient calculated in the past.

Reallocation of the pieces of divided data among the plurality of workers 6 may be realized by the known function of a library of a GPU. For example, it may be realized by, for example, disabling stick_to_shard of NVIDIA DALI (registered trademark).

The gradient prediction unit 102 sets a first assumption and a second assumption in a mini-batch set Bi for a piece of divided data $d_i \in D$.

The first assumption is that there is no data shuffling in a mini-batch from epoch to epoch. The pieces of data are used in the same order.

Assuming that the usage order of mini-batches used in epoch $e \in E$ is $B_{ie}$ ,

$$\forall e \in E, \overline{B_{ie}} = \langle b_{i0}, b_{i0}, \ldots, b_{i(|Bi|-1)} \rangle.$$

The second assumption is that, in a case where the mini-batch Bi is allocated to a worker #w in an epoch e, the mini-batch Bi is allocated to the worker 6 other than w in the next epoch e + 1. The reason for this is to minimize allocation of the same piece of divided data to the excluded worker 6.

Assuming that the worker 6 to which $B_{ie}$ is allocated in the epoch $e \in E$ is a worker($B_{ie}$ ),

$$\text{worker}(\overline{B_{ie}}) \neq \text{worker}(\overline{B_{i(e+1)}}).$$

Based on the above-described assumptions, the gradient prediction units 102 predict the gradient calculated by the excluded worker 6 by using a moving average model. The gradient prediction units 102 may use, for example, a weighted average method.

When the weighted average method is used, the gradient prediction units 102 calculate the gradient calculated by the excluded worker 6 by using the following formula (4).

$$g(b_{ij}, e) = \frac{\sum_{k=1}^{N} w_k \cdot g(b_{ij}, e-k)}{\sum_{k=1}^{N} w_k} \quad \cdots (4)$$

In expression (4) above, g(bij, e - k) represents a gradient value in an epoch e - k for a mini-batch $b_{ij}$. For example, in a case where no actually measured value exists due to exclusion of the worker 6 because of, for example, the presence of a plurality of excluded workers 6, the actually measured value may be substituted by the predicted value.

N is the number of pieces of data used for averaging, and $w_k$ is the weight and ($w_1 > w_2 > \ldots > w_N$) by the weighted average. For example, the more recent the weight is, the more significantly the weight is reflected in the gradient of the excluded worker 6.

According to the second embodiment, the gradient prediction units 102 calculate the gradient of the excluded worker 6 by using the gradient having been calculated by using the same mini-batch as that of the excluded worker 6 in the past epoch of the included worker 6. In so doing, among the plurality of epochs in the past, the more recent the epoch is, the more significantly the epoch is reflected in the gradient of the excluded worker 6. For the prediction of the calculation result of the excluded worker, the gradient prediction units 102 most significantly reflect the calculation result of the most recent epoch among the past epochs of the included workers in the gradient of the excluded worker.

As described above, the gradient prediction units 102 according to the second embodiment predicts the calculation result of the excluded worker 6 by using the calculation result obtained by using the same piece of divided data as that of the excluded worker 6 in the past epoch of the included worker 6.

For the prediction of the calculation result of the excluded worker 6, the gradient prediction units 102 more significantly reflect a more recent epoch among the past epochs of the included workers 6 in the gradient of the excluded worker. For example, for the prediction of the calculation result of the excluded worker 6, the gradient prediction units 102 most significantly reflect the gradient of the most recent epoch among the past epochs of the included workers 6 in the gradient of the excluded worker.

(B) Operation

Processing performed by the gradient prediction unit 102 of the computer system 1 as the example of the second embodiment configured as described above will be described with reference to a flowchart (steps D1 to D2) illustrated in FIG. 10.

In step D1, the gradient prediction units 102 build a moving average model for the mini-batch for which the excluded worker 6 is responsible. The building of the moving average model includes, for example, determination of values of parameters and variables in expression (4) above. The pieces of divided data, the calculation results (gradients), and the like having been allocated to the workers in the past are obtained from a database or the like (not illustrated).

In step D2, the gradient prediction units 102 calculate the gradient calculated by the excluded worker 6 by using the moving average model with expression (4) described above.

(C) Effects

With the computer system 1 as the example of the second embodiment, similar operation effects to those of the above-described first embodiment may be obtained.

(III) Description of Third Embodiment

(A) Configuration

In the computer system 1 according to a third embodiment, the gradient prediction units 102 selectively realize the gradient prediction method of the excluded worker 6 according to the first embodiment and the gradient prediction method of the excluded worker 6 according to the second embodiment.

Other than the above-described portion, the computer system 1 according to the third embodiment is similarly configured to the computer system 1 according to the first embodiment and the computer system 1 according to the second embodiment. Thus, description of the similarly configured portions is omitted.

The gradient prediction method using the degree of similarity used in the first embodiment may be referred to as a first gradient prediction method. The gradient prediction method focusing on the allocation of the data used in the second embodiment may be referred to as a second gradient prediction method.

According to the third embodiment, the gradient prediction units 102 select (determine) the gradient prediction method of the excluded worker 6.

The gradient prediction units 102 may select the first gradient prediction method in a case where a correlation is observed between the gradient and the degree of similarity between the mini-batches of the workers.

The gradient prediction unit 102 may select the second gradient prediction method in a case where the gradient stably changes and select the first gradient prediction method in a case where the gradient does not stably change.

FIG. 11 is a diagram for explaining selective use of the gradient prediction method in the computer system 1 according to the third embodiment.

Referring to FIG. 11, sign A indicates a convex function whose gradient stably changes. As indicated by sign A, the gradient prediction units 102 may select the second gradient prediction method in the case where the gradient stably changes.

Referring to FIG. 11, sign B indicates a nonconvex function whose gradient does not change stably. As indicated by sign B, the gradient prediction units 102 may select the first gradient prediction method in the case where the gradient does not stably change and prediction of a local maximum part is difficult.

(B) Operation

FIG. 12 is a flowchart (step A1 to A10) illustrating the processing of distributed training in the computer system 1 as the example of the third embodiment.

The flowchart illustrated in FIG. 12 is obtained by adding step A10 to the flowchart (step A1 to A9) according to the first embodiment illustrated in FIG. 6.

In the drawing, since steps denoted by the same signs as the signs having been described represent similar processes, and description thereof is omitted.

In the case where the excluded worker 6 exists as a result of the check in step A5, (see the YES route in step A5), the processing proceeds to step A10.

In step A10, the gradient prediction units 102 determine the gradient prediction method. After that, in step A6, the gradient prediction units 102 perform the gradient prediction for the excluded worker 6 by using the determined gradient prediction method (see FIG. 7 or 10). After that, the processing moves to step A7.

(C) Effects

With the computer system 1 as the example of the third embodiment, similar operation effects to those of the above-described first and second embodiments may be obtained.

When the gradient prediction method is switched in accordance with the tendency of the gradient calculated by the workers, accuracy in prediction of the gradient of the excluded worker 6 may be improved. Thus, the accuracy of the machine learning model may be improved.

(IV) Others

Each configuration and each process of each embodiment may be selectively employed or omitted as desired or may be combined with each other as appropriate.

The disclosed technique is not limited to the above-described embodiments and may be carried out while being modified in various ways without departing from the gist of these present embodiments.

For example, although the training job deployment unit 201 of the system management unit 2 detects and excludes the straggler in each of the above-described embodiments, this is not limiting. At least a subset of the plurality of workers 6 may detect and exclude the straggler and may be changed as appropriate to perform the processing.

To carry out the detection and exclusion of the straggler or the gradient prediction for the excluded worker 6 in the workers 6, a leader worker may be provided so that this leader worker performs the detection and exclusion of the straggler or the gradient prediction for the excluded worker (with the leader worker). Alternatively, these may be carried out without providing the leader worker (without the leader worker).

FIG. 13 is a diagram illustrating a comparison between an embodiment with the leader worker and an embodiment without the leader worker.

Referring to FIG. 13, sign A indicates the embodiment in a case where the leader worker is provided. In the case where the leader worker is provided, each worker 6 transmits information desired for the straggler detection/separation and the gradient prediction to the leader worker (one-to-N communication).

The leader worker carries out the straggler detection/separation and the gradient prediction.

The leader worker notifies each worker 6 of results of the straggler detection/separation and the gradient prediction (one-to-N communication).

Referring to FIG. 13, sign B indicates the embodiment in a case where no leader worker is provided. In the case where no leader worker is provided, information desired for the straggler detection/separation and the gradient prediction is shared between the workers 6 (N-to-N communication).

Each worker 6 carries out the straggler detection/separation and the gradient prediction. Since each worker 6 uses the same information, the results are the same between the workers 6.

Although each worker 6 has the function of the gradient prediction unit 102 in each of the above-described embodiments, this is not limiting. For example, a subset of the workers 6 may realize the function of the gradient prediction unit 102 and notify each worker 6 of the calculation result (predicted gradient value).

Although the gradient prediction units 102 perform the gradient prediction for the excluded worker 6 by using the weighted average method according to the above-described second embodiment, this is not limiting. For example, the gradient prediction may be performed by using an exponential smoothing method. The gradient prediction may be carried out with appropriate changes.

According to the above-described third embodiment, instead of the gradient prediction units 102, the system user may select (determine) the gradient prediction method for the excluded worker 6.

The above-described disclosure enables a person skilled in the art to carry out and manufacture the present embodiments.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

**1.** A machine learning program that causes at least one computer to execute a process, the process comprising:

in distributed machine learning in which a plurality of workers perform by using a plurality of pieces of divided data obtained by dividing training data in parallel,
when performance of one or more first workers of the plurality of workers degrades,

determining that first calculation results of the first workers are not reflected in the machine learning, and causing second workers of the plurality of workers to perform the machine learning;
predicting second calculation results of the first workers based on third calculation results of the second workers; and
performing the machine learning by using the third calculation results and the predicted second calculation results.

**2.** The machine learning program according to claim 1, wherein the predicting the second calculation results includes:

acquiring a degree of similarity between the pieces of divided data; and
reflecting fourth calculation results of workers that process pieces of divided data which have a higher degree of similarity to a piece of divided data processed by the first workers more than other pieces of divided data in prediction of the second calculation results.

**3.** The machine learning program according to claim 1 or 2, wherein the predicting the second calculation results includes using a fifth calculation results calculated by using an identical piece of divided data to a piece of divided data of the first workers in a past epoch of the second workers.

**4.** The machine learning program according to claim 1, 2 or 3, wherein the predicting the second calculation results includes reflecting sixth calculation results of the second workers in a most recent epoch of past epochs of the second workers most in a gradient of the first workers.

**5.** A machine learning device comprising:
a control unit configured to:

in distributed machine learning in which a plurality of workers perform by using a plurality of pieces of divided data obtained by dividing training data in parallel,
when performance of one or more first workers of the plurality of workers degrades,

determine that first calculation results of the first workers are not reflected in the machine learning, and cause second workers of the plurality of workers to perform the machine learning,
predict second calculation results of the first workers based on third calculation results of the second workers, and
perform the machine learning by using the third calculation results and the predicted second calculation results.

**6.** The machine learning device according to claim 5, wherein the control unit is further configured to:

acquire a degree of similarity between the pieces of divided data, and

reflect fourth calculation results of workers that process pieces of divided data which have a higher degree of similarity to a piece of divided data processed by the first workers more than other pieces of divided data in prediction of the second calculation results.

**7.** The machine learning device according to claim 5 or 6, wherein the control unit is further configured to use a fifth calculation results calculated by using an identical piece of divided data to a piece of divided data of the first workers in a past epoch of the second workers.

**8.** The machine learning device according to claim 5, 6 or 7, wherein the control unit is further configured to reflect sixth calculation results of the second workers in a most recent epoch of past epochs of the second workers most in a gradient of the first workers.

**9.** A machine learning method for a computer to execute a process comprising:

in distributed machine learning in which a plurality of workers perform by using a plurality of pieces of divided data obtained by dividing training data in parallel,
when performance of one or more first workers of the plurality of workers degrades,

determining that first calculation results of the first workers are not reflected in the machine learning, and causing second workers of the plurality of workers to perform the machine learning;
predicting second calculation results of the first workers based on third calculation results of the second workers; and
performing the machine learning by using the third calculation results and the predicted second calculation results.

**10.** The machine learning method according to claim 9, wherein the predicting the second calculation results includes:

acquiring a degree of similarity between the pieces of divided data; and
reflecting fourth calculation results of workers that process pieces of divided data which have a higher degree of similarity to a piece of divided data processed by the first workers more than other pieces of divided data in prediction of the second calculation results.

**11.** The machine learning method according to claim 9 or 10, wherein the predicting the second calculation results includes using a fifth calculation results calculated by using an identical piece of divided data to a piece of divided data of the first workers in a past epoch of the second workers.

**12.** The machine learning method according to claim 9, 10 or 11, wherein the predicting the second calculation results includes reflecting sixth calculation results of the second workers in a most recent epoch of past epochs of the second workers most in a gradient of the first workers.

**13.** A computer-readable storage medium having the machine learning program of any of claims 1 to 4 stored thereon.

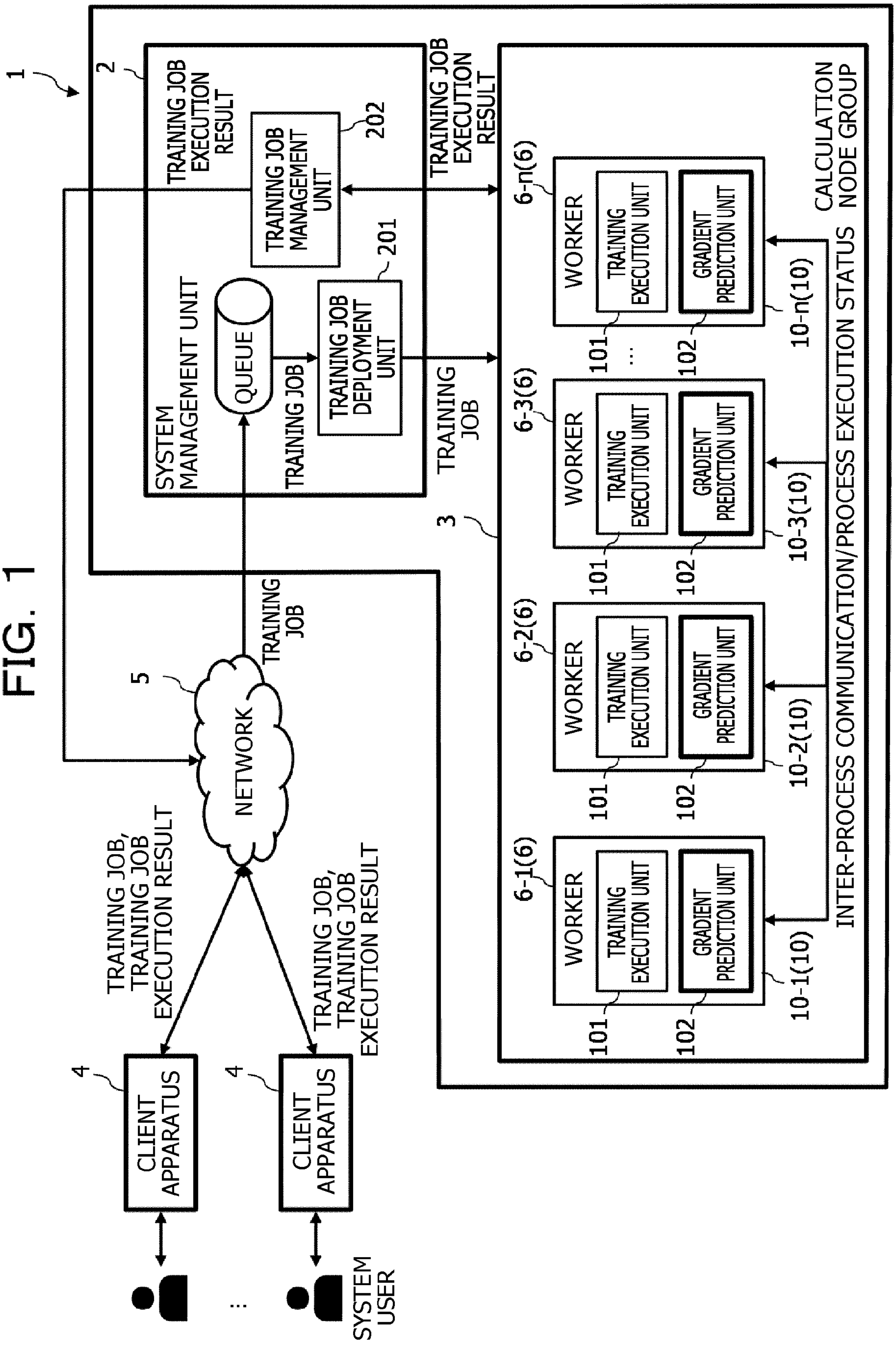
1
2
SYSTEM MANAGEMENT UNIT
QUEUE
TRAINING JOB
TRAINING JOB DEPLOYMENT UNIT
201
TRAINING JOB MANAGEMENT UNIT
202
TRAINING JOB EXECUTION RESULT
TRAINING JOB EXECUTION RESULT
TRAINING JOB
3
CALCULATION NODE GROUP
6-1(6)
6-2(6)
6-3(6)
6-n(6)
WORKER
TRAINING EXECUTION UNIT
GRADIENT PREDICTION UNIT
101
102
10-1(10)
10-2(10)
10-3(10)
10-n(10)
INTER-PROCESS COMMUNICATION/PROCESS EXECUTION STATUS
5
NETWORK
TRAINING JOB
TRAINING JOB, TRAINING JOB EXECUTION RESULT
TRAINING JOB, TRAINING JOB EXECUTION RESULT
4
CLIENT APPARATUS
4
CLIENT APPARATUS
SYSTEM USER

FIG. 1

FIG. 2

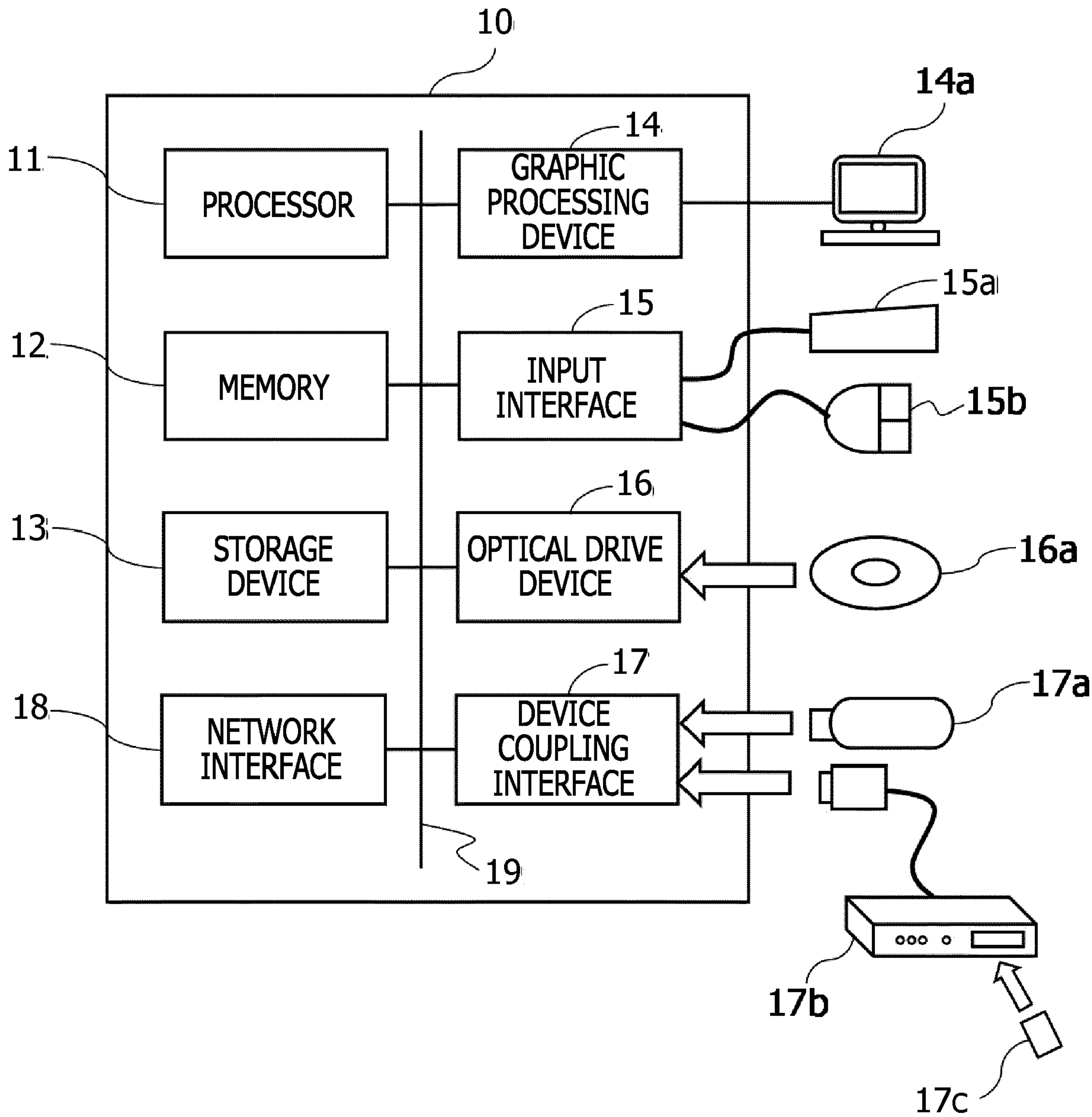
10
11
PROCESSOR
14
GRAPHIC PROCESSING DEVICE
14a
12
MEMORY
15
INPUT INTERFACE
15a
15b
13
STORAGE DEVICE
16
OPTICAL DRIVE DEVICE
16a
18
NETWORK INTERFACE
17
DEVICE COUPLING INTERFACE
17a
19
17b
17c

FIG. 3

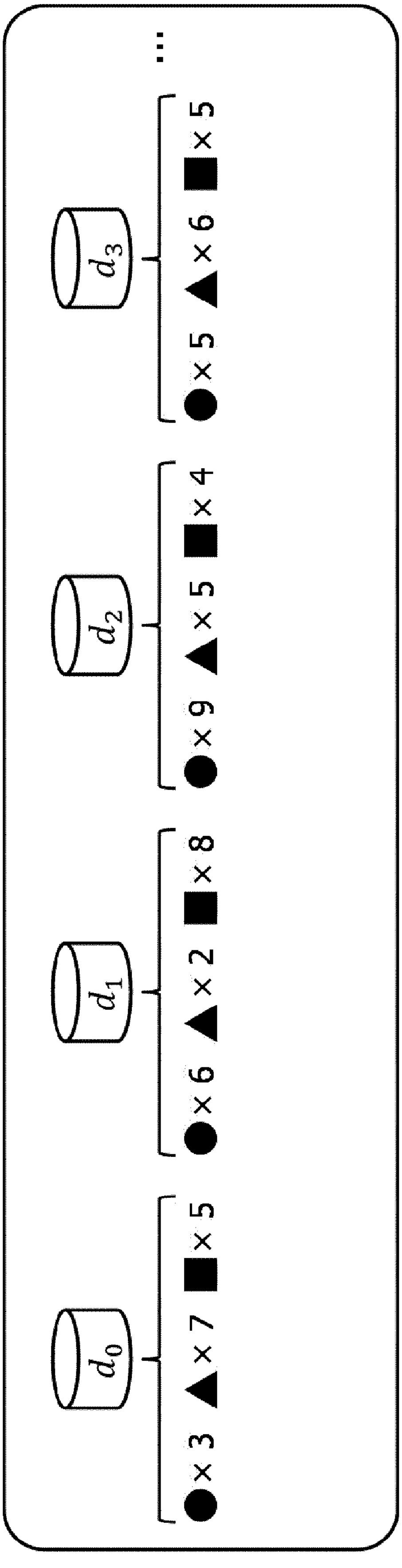

# FIG. 4

A

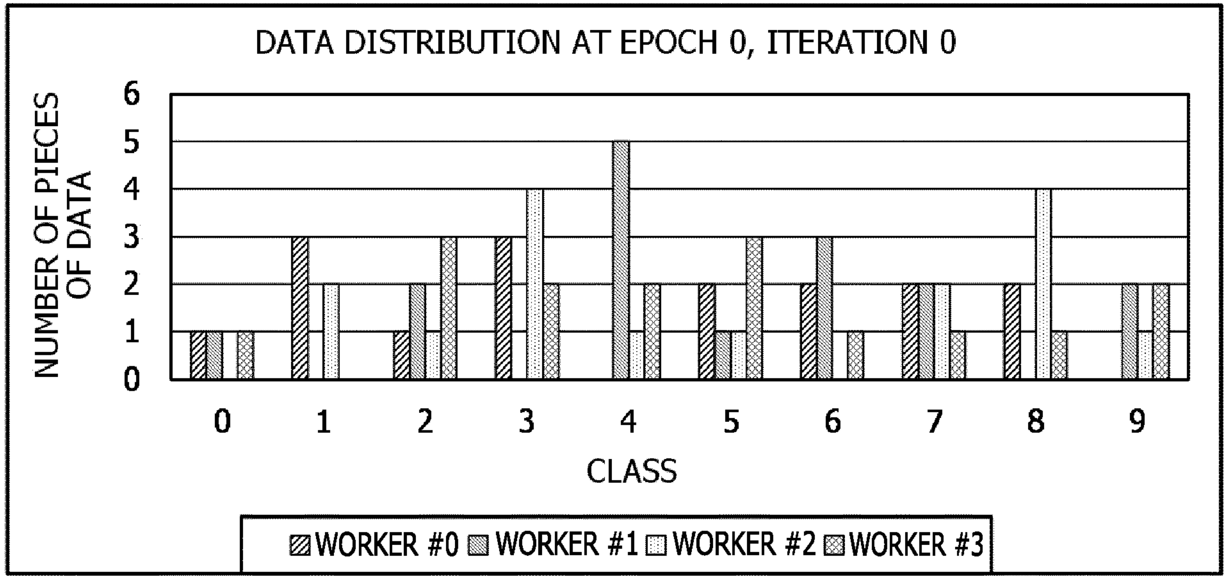


B

| $s(x,y)$ | | $y$ | | | |
|---|---|---|---|---|---|
| | | WORKER #0 | WORKER #1 | WORKER #2 | WORKER #3 |
| $x$ | WORKER #0 | 16 | 7 | 11 | 9 |
| | WORKER #1 | 7 | 16 | 6 | 10 |
| | WORKER #2 | 11 | 6 | 16 | 8 |
| | WORKER #3 | 9 | 10 | 8 | 16 |

FIG. 5

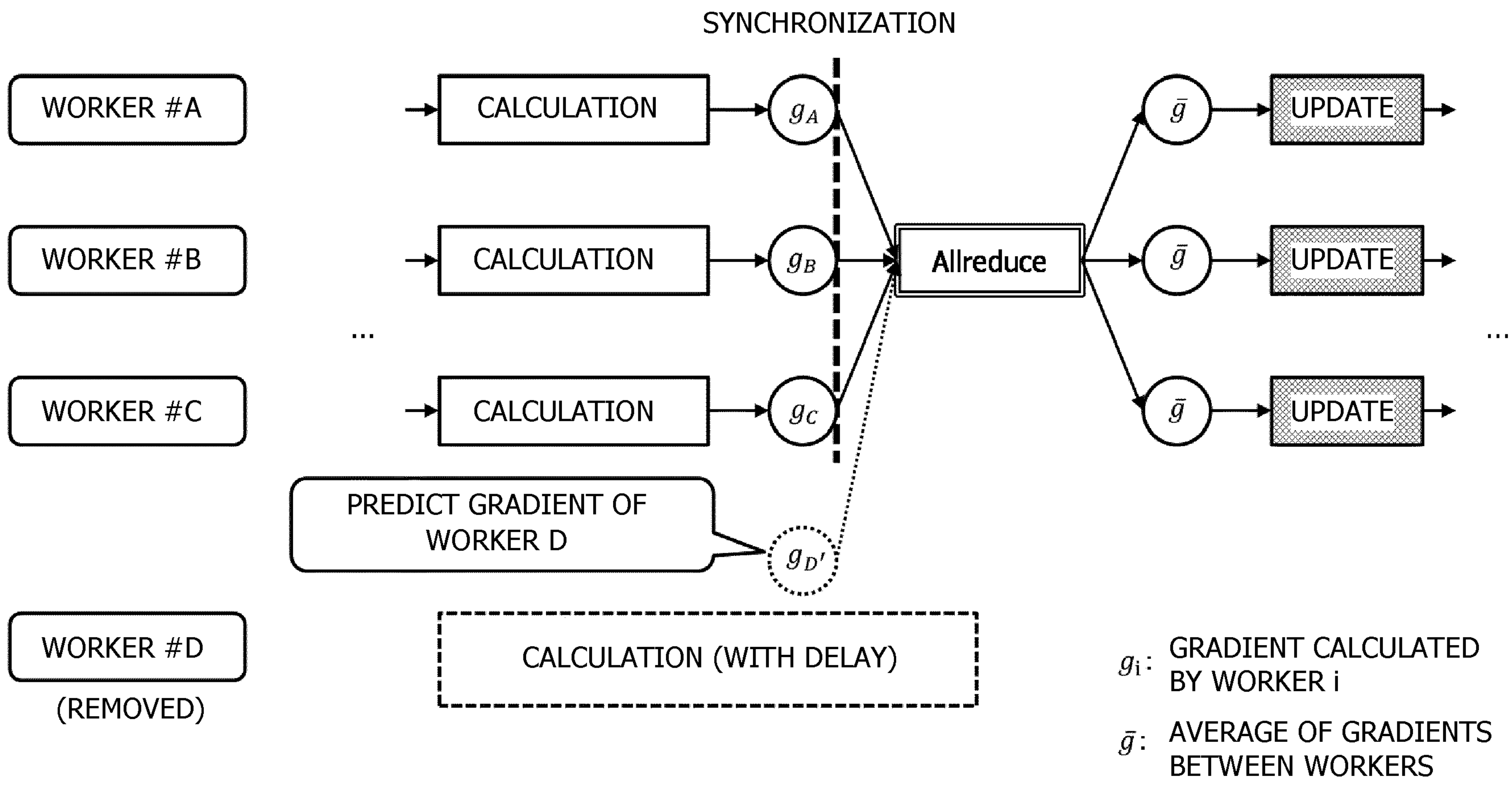
SYNCHRONIZATION
WORKER #A
WORKER #B
WORKER #C
WORKER #D
(REMOVED)
CALCULATION
CALCULATION
CALCULATION
PREDICT GRADIENT OF WORKER D
CALCULATION (WITH DELAY)
$g_A$
$g_B$
$g_C$
$g_{D'}$
Allreduce
$\bar{g}$
$\bar{g}$
$\bar{g}$
UPDATE
UPDATE
UPDATE
$g_i$: GRADIENT CALCULATED BY WORKER i
$\bar{g}$: AVERAGE OF GRADIENTS BETWEEN WORKERS

FIG. 6

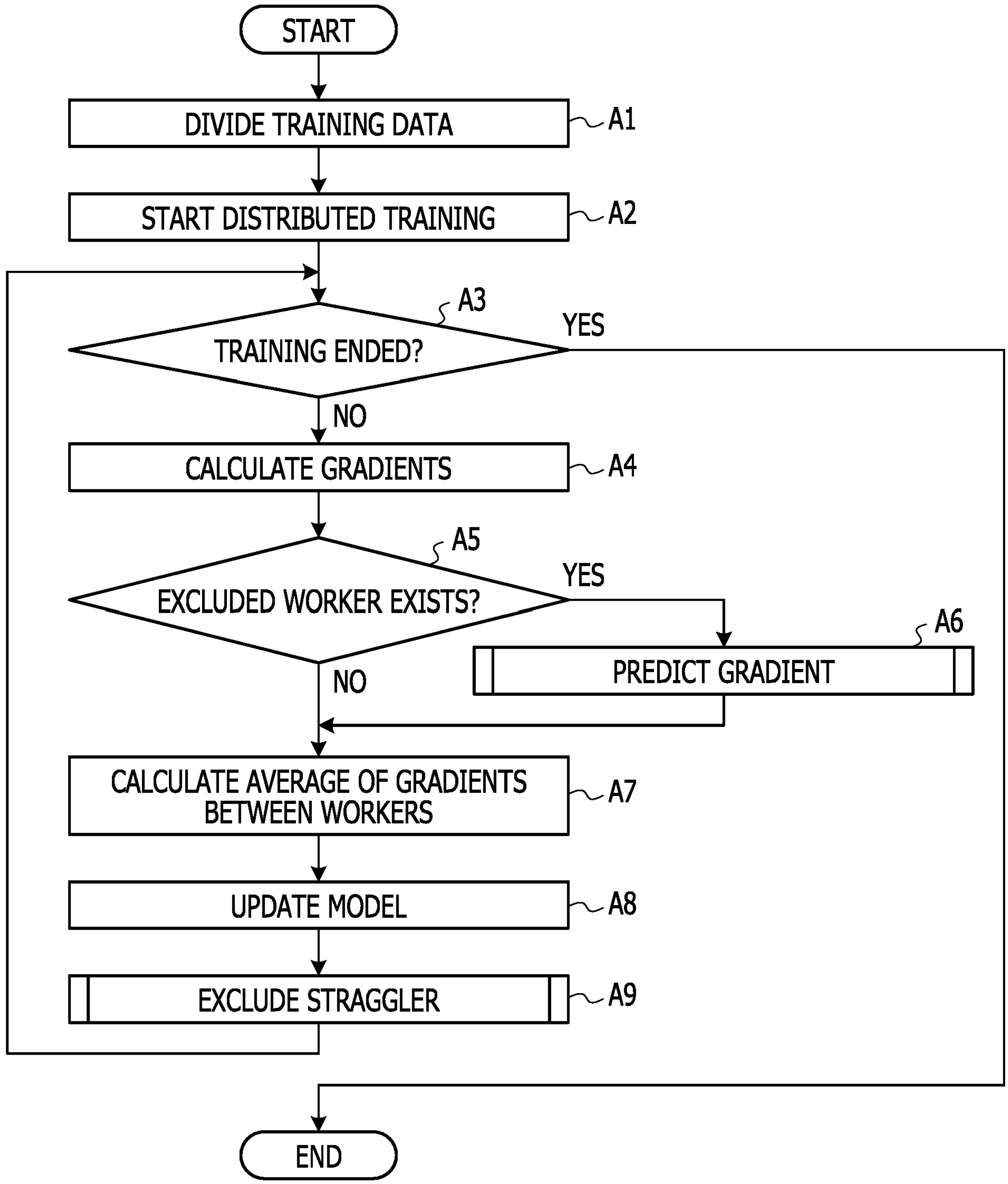
START
DIVIDE TRAINING DATA
A1
START DISTRIBUTED TRAINING
A2
A3
TRAINING ENDED?
YES
NO
CALCULATE GRADIENTS
A4
A5
EXCLUDED WORKER EXISTS?
YES
NO
A6
PREDICT GRADIENT
CALCULATE AVERAGE OF GRADIENTS BETWEEN WORKERS
A7
UPDATE MODEL
A8
EXCLUDE STRAGGLER
A9
END

FIG. 7

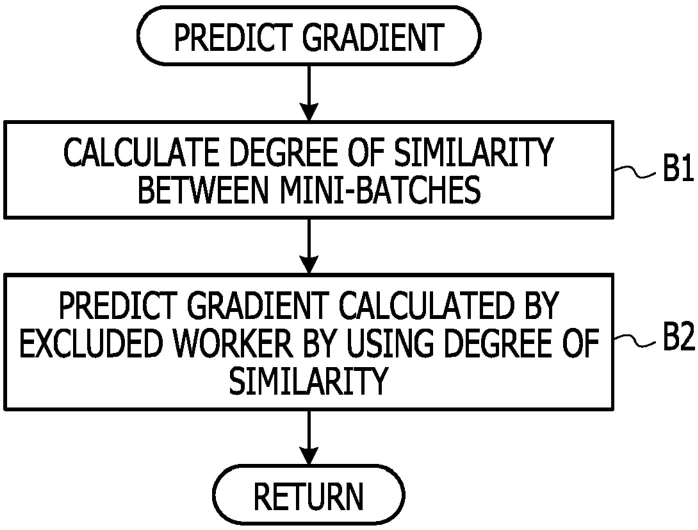
PREDICT GRADIENT
CALCULATE DEGREE OF SIMILARITY BETWEEN MINI-BATCHES
B1
PREDICT GRADIENT CALCULATED BY EXCLUDED WORKER BY USING DEGREE OF SIMILARITY
B2
RETURN

FIG. 8

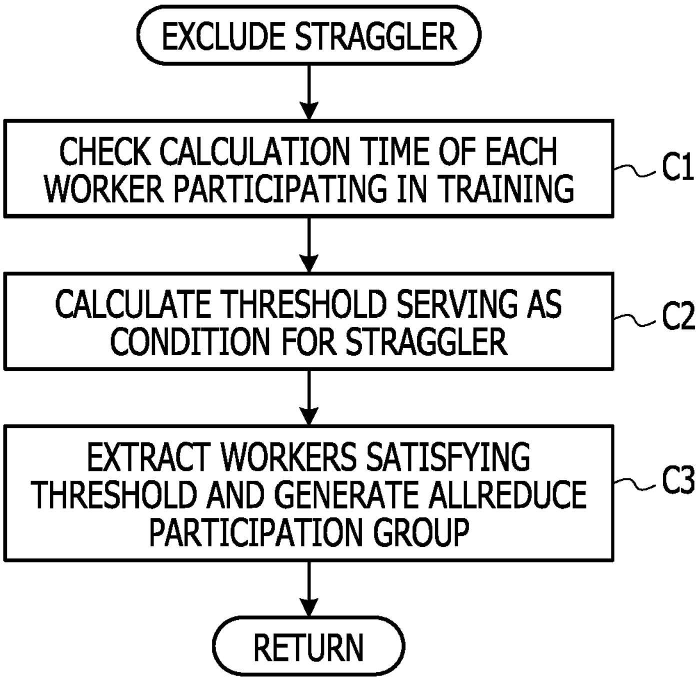
EXCLUDE STRAGGLER
CHECK CALCULATION TIME OF EACH WORKER PARTICIPATING IN TRAINING
C1
CALCULATE THRESHOLD SERVING AS CONDITION FOR STRAGGLER
C2
EXTRACT WORKERS SATISFYING THRESHOLD AND GENERATE ALLREDUCE PARTICIPATION GROUP
C3
RETURN

FIG. 9

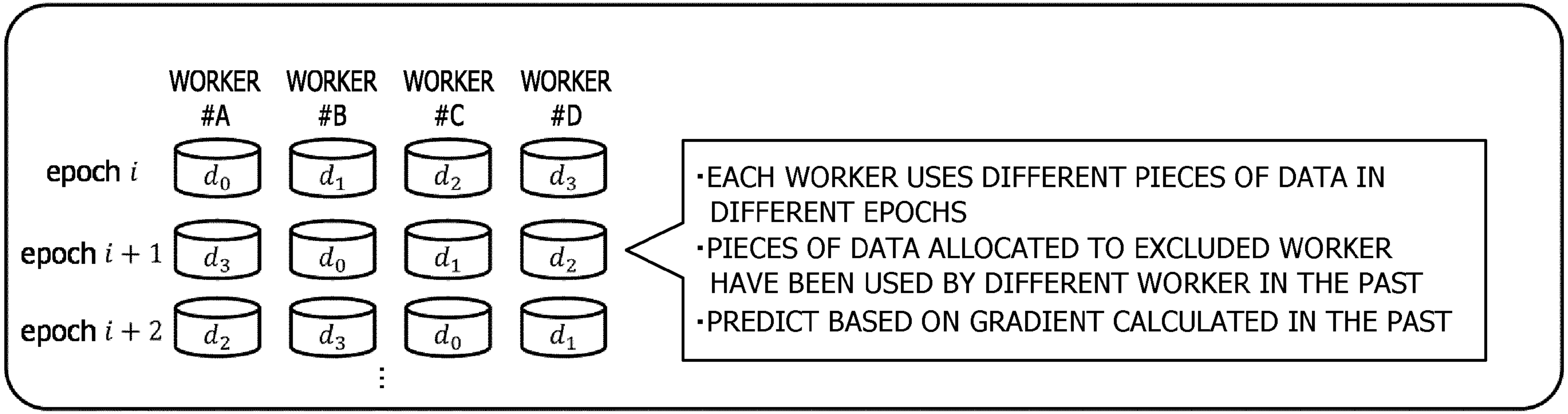
WORKER #A
WORKER #B
WORKER #C
WORKER #D
epoch $i$
epoch $i+1$
epoch $i+2$
$d_0$ $d_1$ $d_2$ $d_3$
$d_3$ $d_0$ $d_1$ $d_2$
$d_2$ $d_3$ $d_0$ $d_1$
·EACH WORKER USES DIFFERENT PIECES OF DATA IN DIFFERENT EPOCHS
·PIECES OF DATA ALLOCATED TO EXCLUDED WORKER HAVE BEEN USED BY DIFFERENT WORKER IN THE PAST
·PREDICT BASED ON GRADIENT CALCULATED IN THE PAST

FIG. 10

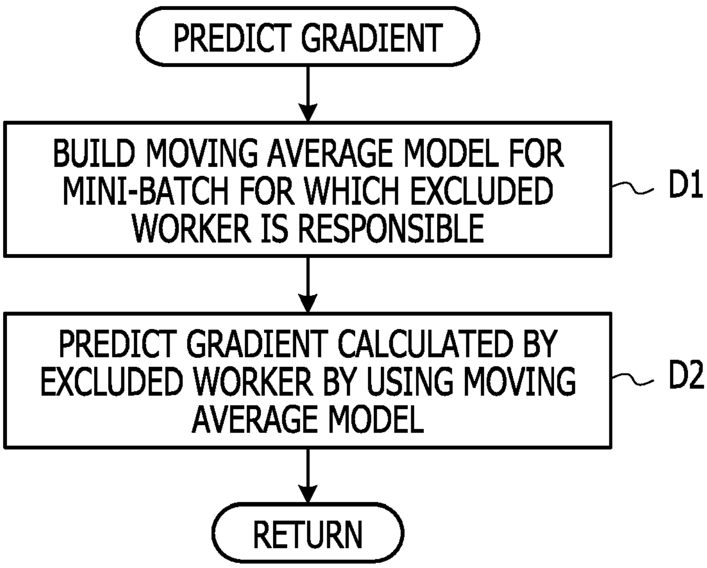
PREDICT GRADIENT
BUILD MOVING AVERAGE MODEL FOR MINI-BATCH FOR WHICH EXCLUDED WORKER IS RESPONSIBLE
D1
PREDICT GRADIENT CALCULATED BY EXCLUDED WORKER BY USING MOVING AVERAGE MODEL
D2
RETURN

FIG. 11

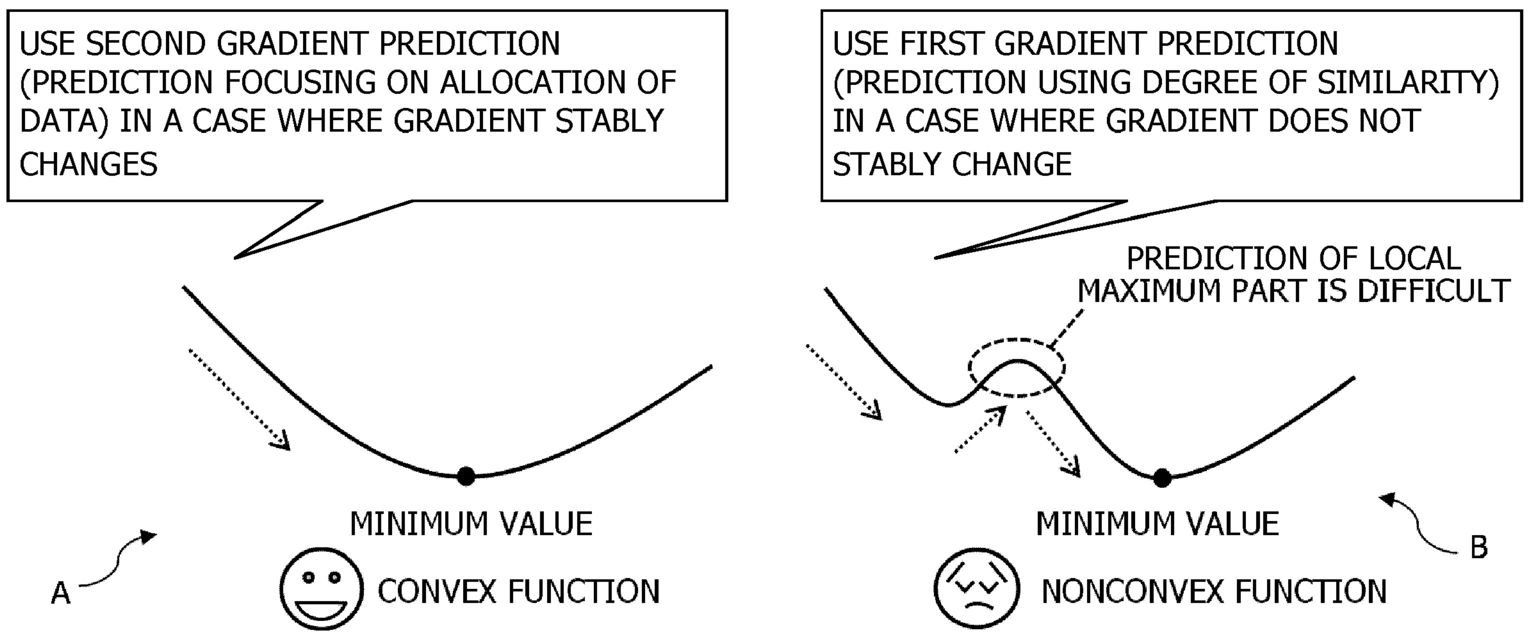
USE SECOND GRADIENT PREDICTION (PREDICTION FOCUSING ON ALLOCATION OF DATA) IN A CASE WHERE GRADIENT STABLY CHANGES
USE FIRST GRADIENT PREDICTION (PREDICTION USING DEGREE OF SIMILARITY) IN A CASE WHERE GRADIENT DOES NOT STABLY CHANGE
PREDICTION OF LOCAL MAXIMUM PART IS DIFFICULT
MINIMUM VALUE
MINIMUM VALUE
CONVEX FUNCTION
NONCONVEX FUNCTION
A
B

FIG. 12

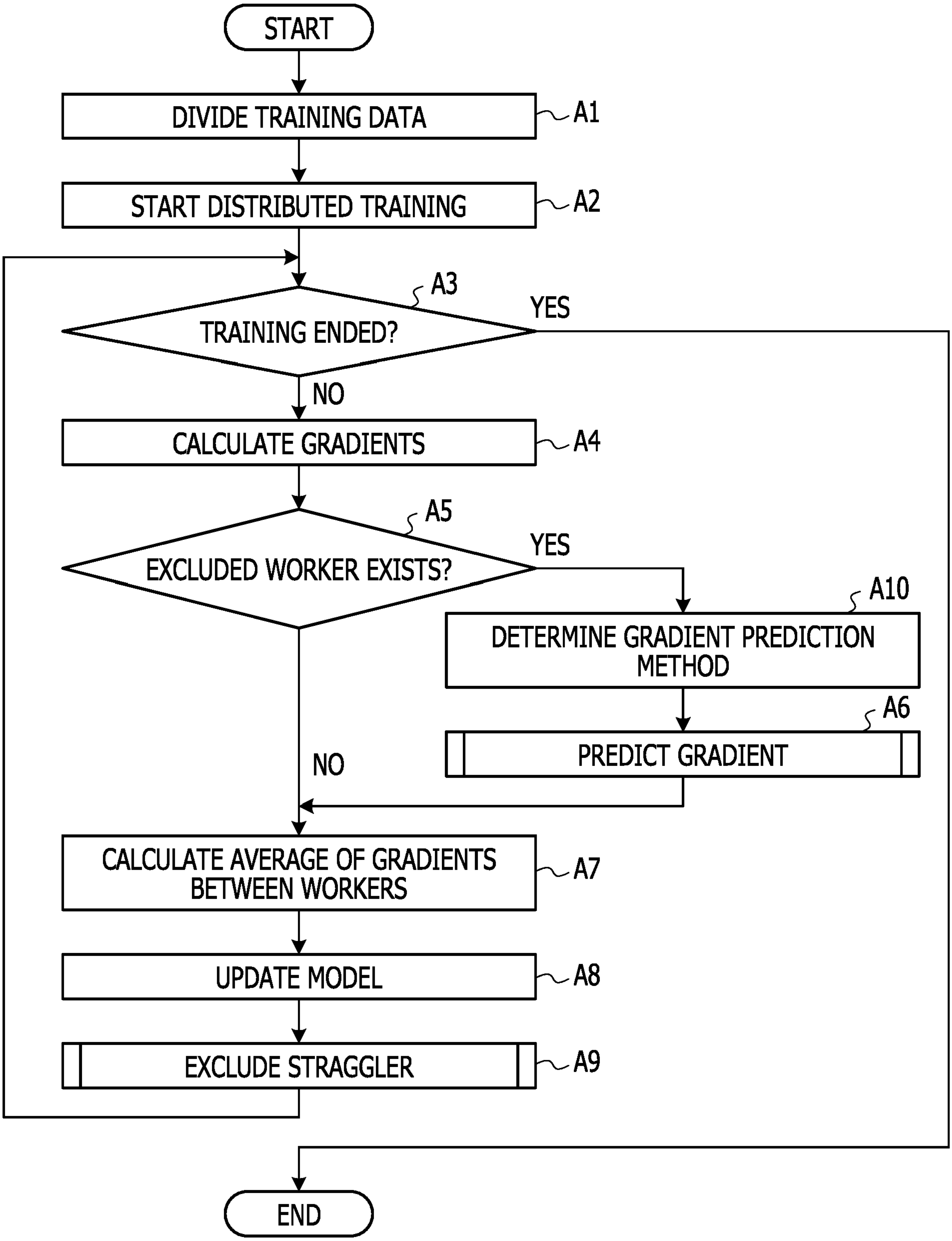
START
DIVIDE TRAINING DATA
A1
START DISTRIBUTED TRAINING
A2
A3
TRAINING ENDED?
YES
NO
CALCULATE GRADIENTS
A4
A5
EXCLUDED WORKER EXISTS?
YES
A10
DETERMINE GRADIENT PREDICTION METHOD
A6
PREDICT GRADIENT
NO
CALCULATE AVERAGE OF GRADIENTS BETWEEN WORKERS
A7
UPDATE MODEL
A8
EXCLUDE STRAGGLER
A9
END

FIG. 13

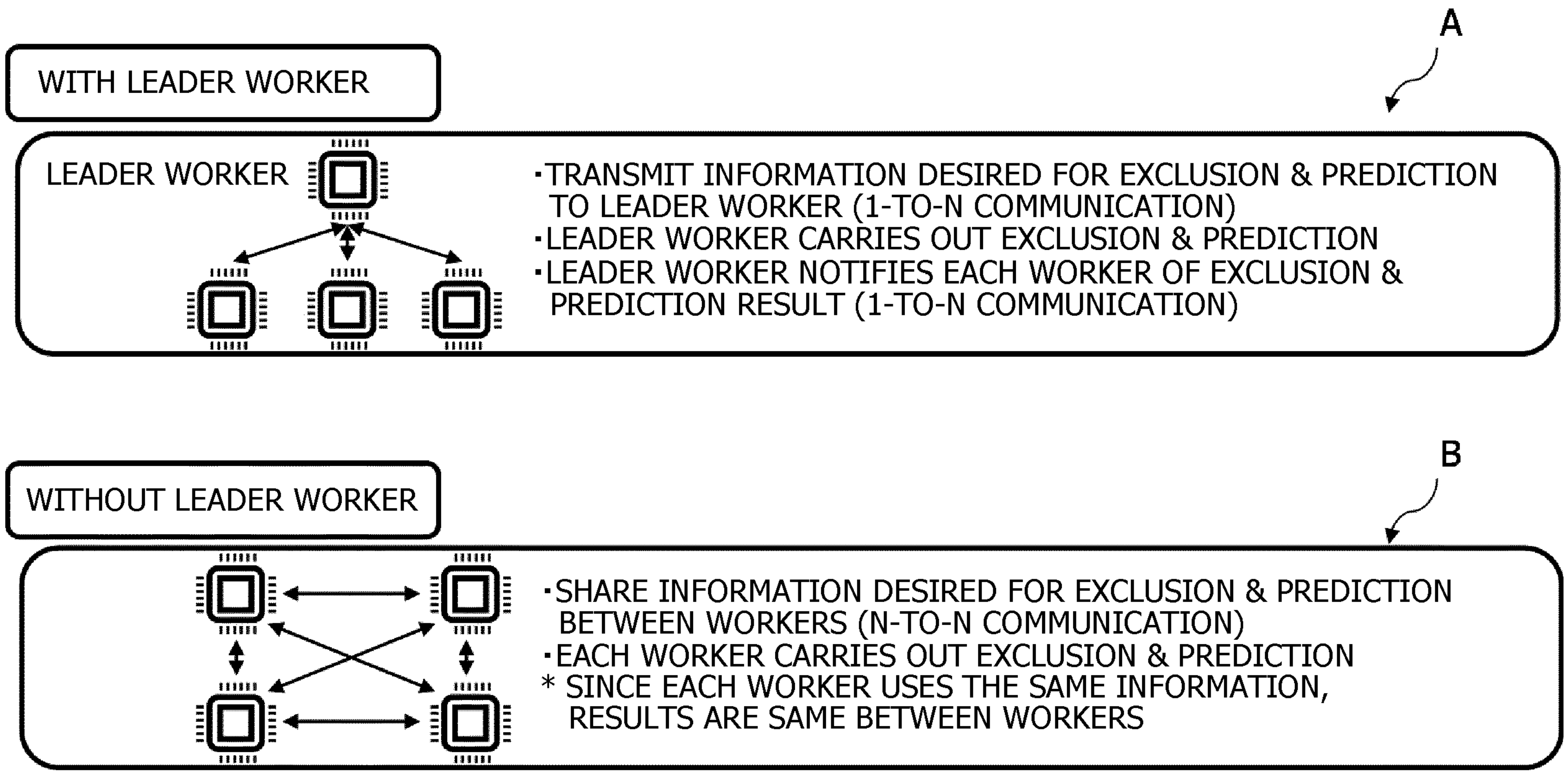
A
WITH LEADER WORKER
LEADER WORKER
·TRANSMIT INFORMATION DESIRED FOR EXCLUSION & PREDICTION TO LEADER WORKER (1-TO-N COMMUNICATION)
·LEADER WORKER CARRIES OUT EXCLUSION & PREDICTION
·LEADER WORKER NOTIFIES EACH WORKER OF EXCLUSION & PREDICTION RESULT (1-TO-N COMMUNICATION)
B
WITHOUT LEADER WORKER
·SHARE INFORMATION DESIRED FOR EXCLUSION & PREDICTION BETWEEN WORKERS (N-TO-N COMMUNICATION)
·EACH WORKER CARRIES OUT EXCLUSION & PREDICTION
* SINCE EACH WORKER USES THE SAME INFORMATION, RESULTS ARE SAME BETWEEN WORKERS

FIG. 14

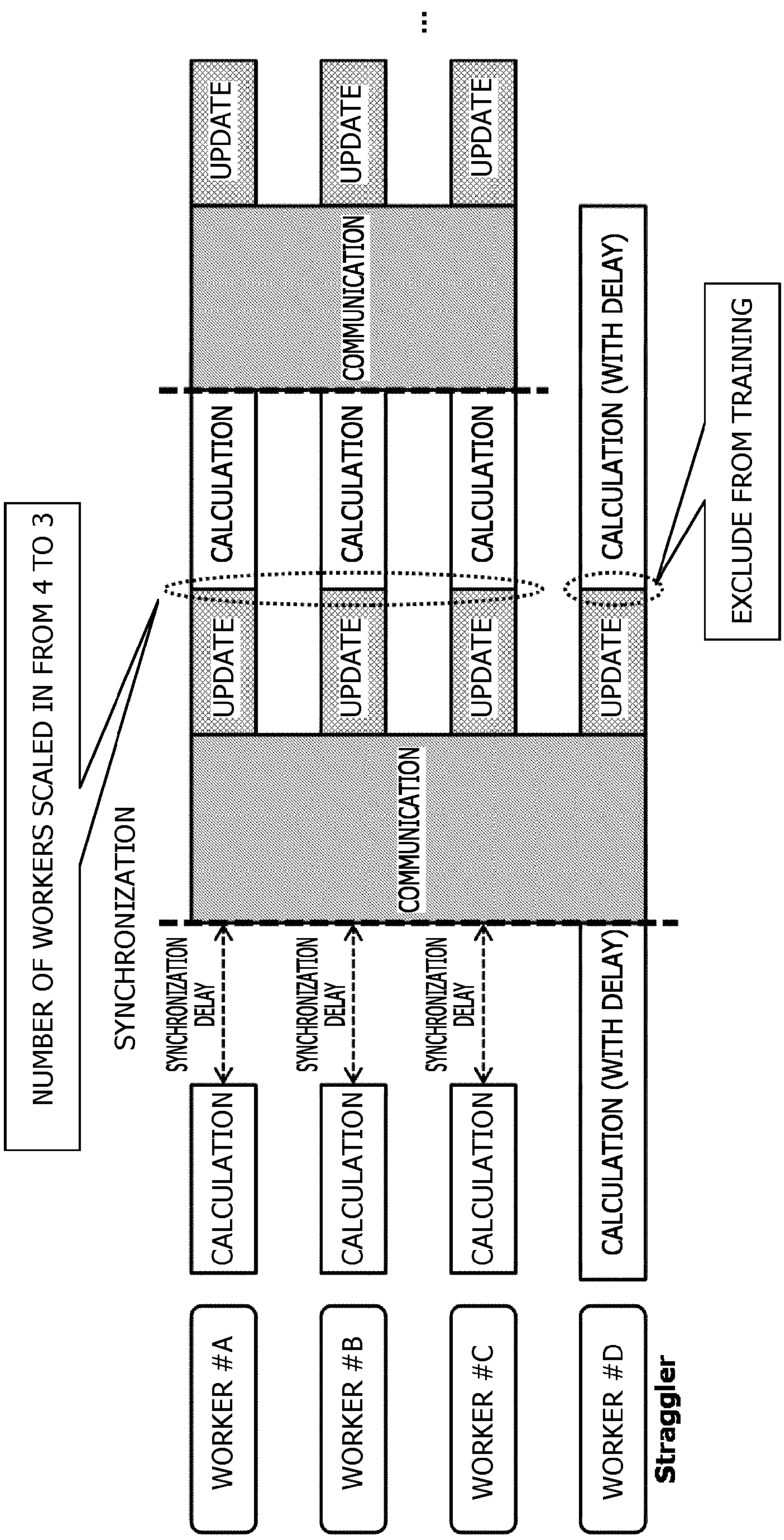
WORKER #A
WORKER #B
WORKER #C
WORKER #D
Straggler
CALCULATION
CALCULATION
CALCULATION
CALCULATION (WITH DELAY)
SYNCHRONIZATION DELAY
SYNCHRONIZATION DELAY
SYNCHRONIZATION DELAY
SYNCHRONIZATION
NUMBER OF WORKERS SCALED IN FROM 4 TO 3
COMMUNICATION
UPDATE
UPDATE
UPDATE
UPDATE
CALCULATION
CALCULATION
CALCULATION
CALCULATION (WITH DELAY)
EXCLUDE FROM TRAINING
COMMUNICATION
UPDATE
UPDATE
UPDATE
...

European Patent Office

# EUROPEAN SEARCH REPORT

Application Number
EP 22 18 6006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WU YIDI ET AL: "Elastic Deep Learning in Multi-Tenant GPU Clusters", IEEE TRANSACTIONS ON PARALLEL AND DISTRIBUTED SYSTEMS, IEEE, USA, vol. 33, no. 1, 9 March 2021 (2021-03-09), pages 144-158, XP011865275, ISSN: 1045-9219, DOI: 10.1109/TPDS.2021.3064966 [retrieved on 2021-07-07] * Sections 3-5; page 147 - page 152 * | 1-13 | INV. G06N3/08 |
| X | OKUNO SHINGO ET AL: "Towards Straggler-Tolerant and Accuracy-Aware Distributed DNN Training in Clouds", 2021 IEEE/ACM 21ST INTERNATIONAL SYMPOSIUM ON CLUSTER, CLOUD AND INTERNET COMPUTING (CCGRID), IEEE, 10 May 2021 (2021-05-10), pages 614-617, XP033952103, DOI: 10.1109/CCGRID51090.2021.00072 [retrieved on 2021-07-27] * Section II; page 615 * | 1-13 | TECHNICAL FIELDS SEARCHED (IPC) G06N |
| X | YANG HAIBO ET AL: "Byzantine-Resilient Stochastic Gradient Descent for Distributed Learning: A Lipschitz-Inspired Coordinate-wise Median Approach", 2019 IEEE 58TH CONFERENCE ON DECISION AND CONTROL (CDC), IEEE, 11 December 2019 (2019-12-11), pages 5832-5837, XP033735948, DOI: 10.1109/CDC40024.2019.9029245 [retrieved on 2020-03-09] * Section II; page 5833 * | 1-13 | |

The present search report has been drawn up for all claims

1

| Place of search | Date of completion of the search | Examiner |
|---|---|---|
| The Hague | 3 January 2023 | Suarez Y Gonzalez, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021068393 A
- JP 2019109875 A
- US 20200364608